# EUROPÄISCHE PATENTSCHRIFT

(11) **EP 2 531 544 B1**
(45) Veröffentlichungstag und Bekanntmachung des Hinweises auf die Patenterteilung: **17.10.2018**
(21) Anmeldenummer: 11701409.2
(22) Anmeldetag: 01.02.2011
(51) Int. Cl.: C08G 65/20, C08G 65/331, C08G 65/26

(54) **POLYETHERBLOCKCOPOLYMERE UND DARAUS ERHÄLTLICHE ZUSAMMENSETZUNGEN**
POLYETHER BLOCK COPOLYMERS AND COMPOSITIONS THAT CAN BE OBTAINED THEREFROM
COPOLYMÈRES BLOCS DE POLYÉTHER ET COMPOSITIONS OBTENSIBLES À PARTIR DE CEUX-CI

(30) Priorität: 02.02.2010 DE 102010001470
(43) Veröffentlichungstag der Anmeldung: 12.12.2012
(60) Teilanmeldung: 12179619.7
(73) Patentinhaber: Henkel AG & Co. KGaA, 40589 Düsseldorf (DE)
(72) Erfinder: ZANDER, Lars, 84524 Neuötting (DE); FRANKEN, Uwe, 41542 Dormagen (DE); KUNZE, Christiane, 51061 Köln (DE); KREBS, Michael, 40724 Hilden (DE); KLEIN, Johann, 40593 Düsseldorf (DE)
(86) Internationale Anmeldenummer: PCT/EP2011/051355
(87) Internationale Veröffentlichungsnummer: WO 2011/095469

(56) Entgegenhaltungen:
- WO-A1-95/00830
- DD-A1- 257 834
- DE-A1-102008 020 980
- RO-B- 111 776
- DATABASE CAPLUS [Online] CHEMICAL ABSTRACTS SERVICE, COLUMBUS, OHIO, US; 28. Juni 2007 (2007-06-28), Cui et al.: "Producing polytetrahydrofuran blocked polyether diol", XP002636564, gefunden im STN Database accession no. 2007:694677 & CN 1 986 599 A (JIANGSU ZHONGSHAN CHEMICAL CO [CN]) 27. Juni 2007 (2007-06-27)
- OKANO ET AL.: "Suppression of platelet activity on microdomain surfaces of 2-hydroxyethyl methacrylate-polyether block copolymers", JOURNAL OF BIOMEDICAL MATERIALS RESEARCH, Bd. 20, Nr. 7, 1. Oktober 1986 (1986-10-01), Seiten 1035-1047, XP000002652089, ISSN: 0021-9304, DOI: 10.1002/jbm.820200716
- DATABASE CAPLUS [Online] CHEMICAL ABSTRACTS SERVICE, COLUMBUS, OHIO, US; 29. Oktober 2006 (2006-10-29), Nagarajan et al.: "Preparation of acrylic block copolymer emulsion", XP000002652090, gefunden im STN Database accession no. 2006:1127471
- KOBERSTEIN ET AL.: "Compression-Molded Polyurethane Block Copolymers. 1. Microdomain Morphology and Thermomechanical Properties", MACROMOLECULES, Bd. 25, Nr. 23, 1. November 1992 (1992-11-01), Seiten 6195-6204, XP000002652091, ISSN: 0024-9279, DOI: 10.1021/ma00049a017
- KOBERSTEIN ET AL.: "Compression-Molded Polyurethane Block Copolymers. 2. Evaluation of Microphase Compositions", MACROMOLECULES, Bd. 25, Nr. 23, 1. November 1992 (1992-11-01), Seiten 6205-6213, XP000002652092, ISSN: 0024-9279, DOI: 10.1021/ma00049a018

## Beschreibung

Die vorliegende Erfindung betrifft spezielle Polyetherblockcopolymere, Zusammensetzungen auf Basis solcher Polyetherblockcopolymere, Zubereitungen, welche die Polyetherblockcopolymere beziehungsweise daraus hergestellte Zusammensetzungen enthalten und die Verwendung der Polyetherblockcopolymere sowie der Zubereitungen.

Umsetzungsprodukte von Hydroxylgruppen enthaltenden Polymeren oder Oligomeren - beispielsweise mit stöchiometrischem Überschuss an Di- oder Polyisocyanaten, die dann als sogenannte Polyurethan-Prepolymere mit Isocyanat-Endgruppen vorliegen - finden Anwendung in einer Vielzahl von Gebieten, beispielsweise als Dichtstoffe, Beschichtungsmaterialien oder Klebstoffe.

Für viele Anwendungsfälle sind derartige Zusammensetzungen lösungsmittelfrei und sehr hochviskos und/oder pastös, sie werden bei Raumtemperatur oder bei leicht erhöhter Temperatur zwischen etwa 50°C und etwa 100°C verarbeitet.

Wenn diese Zusammensetzungen bei Raumtemperatur fest sind und unter Ausschluss von Feuchtigkeit in der Wärme bzw. Hitze schmelzbar sind, können sie als reaktive Schmelzklebstoffe eingesetzt werden. Reaktive einkomponentige Schmelzklebstoffe im Sinne dieser Erfindung sind also feuchtigkeitshärtende bzw. feuchtigkeitsvernetzende Klebstoffe, die bei Raumtemperatur fest sind und in Form ihrer Schmelze als Klebstoff appliziert werden. Beispielhaft genannt seien Polyurethan-Schmelzklebstoffe, deren polymere Bestandteile Urethangruppen sowie reaktionsfähige Isocyanatgruppen enthalten. Durch das Abkühlen der Schmelze über dem Auftrag auf das Substrat und das weitere Kühlen der Schmelze durch die Substrat-Teile erfolgt zunächst eine rasche physikalische Abbindung des Schmelzklebstoffes durch dessen Erstarren, gefolgt von einer chemischen Reaktion der noch vorhandenen reaktiven Gruppen mit Feuchtigkeit aus der Umgebung zu einem vernetzten unschmelzbaren Klebstoff. Reaktive Schmelzklebstoffe auf der Basis von Isocyanat-terminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert, eine weitere Ausführungsform besteht aus zweikomponentigen lösungsmittelhaltigen oder lösungsmittelfreien Systemen auf Polyurethanbasis, bei denen die polymeren Bestandteile der einen Komponente Urethangruppen sowie reaktionsfähige Isocyanatgruppen enthalten und die zweite Komponente Polymere bzw. Oligomere mit Hydroxylgruppen, Aminogruppen, Epoxigruppen und/oder Carboxylgruppen enthält. Bei diesen zweikomponentigen Systemen werden die Isocyanat-gruppenhaltige Komponente und die zweite Komponente unmittelbar vor der Applikation gemischt, im Normalfall mit Hilfe eines Misch- und Dosiersystems.

Klebstoffe, Dichtstoffe oder Beschichtungsmittel auf Basis reaktiver Polyurethan-Zusammensetzungen zeichnen sich durch ein sehr hohes Leistungsprofil aus. Daher konnten in den letzten Jahren zunehmend neue Anwendungen für diese Kleb-, Dichtstoffe oder Beschichtungsmittel erschlossen werden. Zusammensetzungen für derartige Klebstoffe und/oder Dichtstoffe sind bereits aus sehr vielen Patentanmeldungen und sonstigen Veröffentlichungen bekannt.

Die WO 99/28363 A1 betrifft Schmelzklebstoffzusammensetzungen auf Basis von Polyurethanprepolymeren, welche bei Raumtemperatur fest sind und feuchtigkeitsvernetzend ausgebildet sind. Die Klebstoffzusammensetzungen enthalten neben einem Reaktionsprodukt aus der Reaktion eines ersten Polyisocyanats mit einem Polymer niedrigen Molekulargewichts, welches ethylenisch ungesättigte Monomere umfasst und aktive Wasserstoffgruppen aufweist, mindestens ein Polyurethanprepolymer mit freien Isocyanatgruppen aus der Herstellung mindestens eines Polyols aus der Gruppe von Polyetherdiolen, Polyethertriolen, Polyesterpolyolen, aromatischen Polyolen und deren Mischungen mit mindestens einem zweiten Polyisocyanat sowie gegebenenfalls verschiedene Additive.

EP 0 205 846 A1 beschreibt die Herstellung von Hydroxy-telechelen Polymeren auf Basis von Acrylaten durch Polymerisation in Gegenwart eines zur Übertragung von Hydroxylgruppen auf das Polymer befähigten Initiators aus der Gruppe der Peroxide, Hydroperoxide oder Azoverbindungen oder unter Einwirkung von UV-Strahlen, vorzugsweise genannt wird Wasserstoffperoxid und gleichzeitig in Gegenwart von Hydroxylgruppen enthaltenden Reglern der allgemeinen Formel HO-A-Sₓ-B-OH. Gemäß der Lehre dieser Schrift können die Hydroxy-telechelen Polymeren mit Diisocyanaten so umgesetzt werden, dass Isocyanat-Endgruppen enthaltende Prepolymere entstehen. Zubereitungen auf Basis dieser NCO-haltigen Prepolymeren eignen sich gemäß EP 0 205 846 A1 als Kleb- und Dichtstoffe.

EP 0455 400 A2 beschreibt ein Gemisch aus Isocyanat terminierten Polyurethanprepolymeren und dessen Verwendung als Klebstoff. Das erste Prepolymer basiert auf Polyhexamethylenadipat, das zweite auf Polytetramethylenetherglycol, dabei sollen die beiden Prepolymeren vorzugsweise zumindest teilweise unverträglich sein. Der Klebstoff soll eine gute Haftung zu einer Vielzahl von Substraten, insbesondere zu Kunststoffen haben.

WO 92/013017 A1 beschreibt ein Gemisch aus Isocyanat terminierten Polyurethanprepolymeren. Das erste Prepolymer ist ein Reaktionsprodukt aus einem überwiegend semikristallinen Polyester und einem Polyisocyanat. Der Polyester ist ein Reaktionsprodukt eines Diols mit 2 bis 10 Methylengruppen und einer Dicarbonsäure mit 2 bis 10 Methylengruppen. Diole können Ethylenglycol, Butandiol-1,4, Pentandiol-1,5, Hexandiol-1,6, Octandiol-1,8, Decandiol-1,10, Cyclohexandiol-1,4, Cyclohexandimethanol-1,4 und Mischungen daraus sein. Dicarbonsäuren können Bernsteinsäure, Glutarsäure, Adipinsäure, Sebacinsäure, Azelainsäure, Dodecandisäure und Mischungen daraus sein. Bevorzugt sind Polyester aus Hexandiol-1,6 und Adipinsäure. Das zweite Prepolymer enthält ein Reaktionsprodukt eines Polytetramethylenetherglycols und eines Polyisocyanats. Das dritte Prepolymer basiert auf einem Reaktionsprodukt eines amorphen Polyesters und einem Polyisocyanat. Der amorphe Polyester enthält aromatische Struktureinheiten. Bevorzugte Diole sind Ethylenglycol, Propylenglycol, Butandiol, Hexandiol, Cyclohexandimethanol, Neopentylglycol und Mischungen daraus. Die Dicarbonsäuren werden ausgewählt aus der Gruppe bestehend aus Bernsteinsäure, Adipinsäure, Sebacinsäure, Isophthalsäure, ortho-Phthalsäure, Terephthalsäure und Mischungen daraus. Das Gemisch kann noch ein viertes Prepolymer enthalten, das aus einem Reaktionsprodukt aus einem verzweigten Polyester aus Adipinsäure, Diethylenglycol und Trimethylolpropan mit einem Polyisocyanat besteht. Das höhere Molekulargewicht soll die Klebrigkeit und Kohäsion signifikant erhöhen. Nachteilig ist die hohe Viskosität. Der Klebstoff soll gut auf Metallen und polymeren Substraten wie Polystyrol oder Polymethylmethacrylat haften.

WO 2001/046330 A1 beschreibt Zusammensetzungen enthaltend Umsetzungsprodukte eines Polyisocyanats mit einem Polyester-Polyether-Copolymer, ein Verfahren zu deren Herstellung und ihre Verwendung als reaktive Schmelzklebstoffe. Dort wird vorgeschlagen, diese Copolymeren aus Carboxylterminierten Polyester-Bausteinen und Polyether-Polyolen herzustellen. Obwohl diese Schmelzklebstoffe bereits viele technische Anforderungen an moderne Klebstoffe, insbesondere Schmelzklebstoffe erfüllen, lassen sie sich in etlichen Bereichen nicht einsetzen.

WO 2004/013199 A1 beschreibt segmentierte Polyurethan-Schmelzklebstoff-Zusammensetzungen, die ein Umsetzungsprodukt stöchiometrischen Überschusses eines Polyisocyanats mit einem hydroxyfunktionellen Polyester-ether-Block-Copolymer auf Basis aromatischer Dicarbonsäuren, ein Umsetzungsprodukt eines Polyisocyanats mit einem Polyesterpolyol und/oder gegebenenfalls ein Umsetzungsprodukt eines Polyisocyanats mit einem Polyetherpolyol sowie gegebenenfalls nicht reaktive thermoplastische Polymere enthalten. Der Einbau der erstgenannten Komponente erhöht den reaktiven Anteil in der Klebstoffzusammensetzung und führt zu verbesserter Wärmestandfestigkeit und Hydrolysebeständigkeit unter gleichzeitiger Absenkung des Schmelzpunktes der Polyester-Ether-Copolymer-Komponente. Darüber hinaus soll sich die Verträglichkeit der Komponenten in der Zusammensetzung verbessern. Polyetherblockcopolymere mit einem zentralen Block und mindestens zwei daran anknüpfenden Blöcken aus Polyoxypropylen und ihre Auswirkungen auf die Verträglichkeit der Komponenten beziehungsweise auf Separationsphänomene werden nicht thematisiert.

Auch WO 91/15530 A1 beschreibt Urethan-Hotmelt-Klebstoffe, die Polyisocyanatprepolymere aus Polyolen und Polyisocyanaten sowie Polyester-Polyether-Copolymere umfassen, wobei letztere cyclische Bestandteile aufweisen und die Alkoholkomponente der Ester-Einheiten aus kurzkettigen Alkylenresten oder amorphen, langkettigen Poylethereinheiten besteht. Der Einbau der Polyester-Polyether-Copolymere führt zu hoher Wasserdampf-Durchlässigkeit der auf dieser Basis formulierten Hotmelt-Kleb-und Dichtstoffe, was neben der Möglichkeit zur Ausbildung dickerer Klebstofffilme eine Reihe weiterer Vorteile mit sich bringt.

RO 111776 offenbart Blockcopolymere aus Polymethylmethacrylat und Polypropylenoxid und Okano et al. (Suppression of Platelet activity on microdomain surfaces of 2-hydroxyethyl methacrylate-polyether block copolymers", Journal of Biomedical Materials Research, Bd. 20, Nr. 7, 1 Oktober 1986, Seiten 1035-1047) offenbart Blockcopolymere aus Poly(2-Hydroxyethylmethacrylat) und Polyethylenoxid oder Polypropylenoxid.

Es ist bekannt, dass Blockcopolyester, wie sie in WO 2004/013199 A1 und WO 91/15530 A1 beschrieben werden, sich auch bei Temperaturen oberhalb ihres Schmelzpunktes nicht ohne weiteres mit isocyanatterminierten Prepolymeren mischen lassen. Es kommt häufig zu Phasen- und/oder Domänenseparation, was die Verarbeitung solcher Zusammensetzungen wesentlich erschwert.

Es besteht daher weiterhin Bedarf an verbesserten reaktiven Polymeren und Zusammensetzungen, insbesondere an Polyurethanen, die sich für den Einsatz als Klebstoffe, Dichtstoffe oder Beschichtungen, insbesondere als Hotmelt-Kleb- oder Dichtstoffe, eignen. Die eingesetzten Rohstoffe sollen leicht und kostengünstig zugänglich sein.

Aufgabe der vorliegenden Erfindung ist es daher, Komponenten zur Herstellung von Zusammensetzungen bereitzustellen, auf deren Basis Kleb-, Dicht- und/oder Beschichtungsstoffe formuliert werden können, wobei diese Komponenten eine gute Mischbarkeit mit anderen Polymerkomponenten sowohl beim Zusammengeben vor der Umsetzung als auch innerhalb des fertigen Polymers beziehungsweise der fertigen Zusammensetzung aufweisen und auf diese Weise Separationsprozesse (Phasen- und Domänenseparation) minimieren sollen. Die aus den Zusammensetzungen hergestellten Klebstoffe oder Dichtstoffe sollen darüber hinaus ein breites Adhäsionsspektrum zu einer Vielzahl von Substraten haben und ein möglichst hohes Festigkeitsniveau nach der Aushärtung aufweisen.

Die erfindungsgemäße Lösung der Aufgabe ist den Patentansprüchen zu entnehmen. Sie besteht im Wesentlichen in der Bereitstellung von Polyether-Blockcopolymeren der allgemeinen Struktur B-(A-OH)ₙ. Dabei ist n gleich oder größer als 2 und die Blöcke A bestehen aus Polyoxypropyleneinheiten und der zentrale Block B besteht aus Polyacrylat- oder Polymethacrylateinheiten.
In bevorzugten Ausführungsformen ist n gleich oder kleiner als 10, insbesondere gleich oder kleiner als 6 und besonders bevorzugt gleich 2 oder 3.

Unter Blockcopolymeren werden Polymere verstanden, deren Moleküle aus linear verknüpften Blöcken bestehen. Als Block wird dabei ein Abschnitt eines Polymermoleküls angesehen, der mehrere identische Repetiereinheiten umfasst und mindestens ein konstitutionelles oder konfiguratives Merkmal aufweist, das sich von denen der angrenzenden Abschnitte (Blöcke) unterscheidet. Unter dem Begriff "Polymer" beziehungsweise mit dem Präfix "Poly" gekennzeichneten Verbindungen werden Verbindungen verstanden, die mehr als zehn identische Repetiereinheiten aufweisen.

Das erfindungsgemäße Polyether-Blockcopolymer besteht aus mindestens zwei Polyoxypropylenblöcken A und einem zentralen Polymerblock B. Bei dem Polymerblock B handelt es sich um Polyacrylat- oder Polymethacrylateinheiten. Herstellbar ist ein derartiges Polyoxypropylen-Blockcopolymer beispielsweise aus einer mindestens bifunktionellen Polymerverbindung B mit mindestens zwei terminalen Hydroxylgruppen, auf die der Polyoxypropylenblock A aufpolymerisiert wird.

Als Startverbindung B sind insbesondere hydroxyfunktionelle Polyacrylat- oder Polymethacrylateinheiten geeignet.

Polyacrylate oder Polymethacrylate können nach allgemein bekannten Verfahren hergestellt werden. Insbesondere eignen sich erfindungsgemäß lineare und/oder schwach verzweigte Acrylester-Copolymer-Polyole, die beispielsweise durch die radikalische Copolymerisation von Acrylsäureestern bzw. Methacrylsäureestern mit Hydroxy-funktionellen Acrylsäure- und/oder Methacrylsäure-Verbindungen wie Hydroxyethyl(meth)acrylat oder Hydroxypropyl(meth)acrylat hergestellt werden können. Wegen dieser Herstellungsweise sind die Hydroxylgruppen bei diesen Polyolen in der Regel statistisch verteilt, so dass es sich hierbei entweder um lineare oder schwach verzweigte Polyole mit einer durchschnittlichen OH-Funktionalität handelt.

Das Starterpolyol B hat vorzugsweise ein mittleres Molekulargewicht von 500 bis 10.000 g/mol (Dalton), vorzugsweise liegt der mittlere Molekulargewichtsbereich des Starterblockes B zwischen 1.000 und 4.000 Dalton. Der zentrale Block B wird bevorzugt unter DMC-Katalyse, Katalyse durch ein oder mehrere Phosphacen- und/oder Porphyrin-Derivat(e) oder Alkalimetall-Katalyse, insbesondere Cs-Katalyse, bevorzugt unter DMC-Katalyse, propoxyliert.

Besonders vorteilhafte viskoelastische Eigenschaften der herzustellenden Polyether-Blockcopolymere werden erreicht, wenn sowohl der zentrale Block B als auch die auf das Starterpolyol B aufpolymerisierten Polyoxypropylen-Polymerblöcke A eine enge Molmassenverteilung und damit eine niedrige Polydispersität besitzen. Dies kann beispielsweise dadurch erreicht werden, dass als Alkoxylierungskatalysator ein so genannter double-metal-cyanide-catalysator (DMC-Katalysator) verwendet wird. Beispiele für derartige DMC-Katalysatoren sind Zinkhexacyanokobaltat (II), Zinkhexacyanoferrat (III), Zinkhexacyanoferrat (II), Nickel(II)hexacyanoferrat (II) und Kobalt(II)hexacyanokobaltat (III). Diese DMC-Katalysatoren sind in der Literatur beschrieben.

Ganz besonders eignen sich für das erfindungsgemäße Aufpolymerisieren der Polyoxypropylen-Blöcke A DMC-Katalysatoren mit der allgemeinen Formel

M¹ₐ[M²(CN)_{b}(A)_{c}]_{d}·wM³Dₑ·xH₂O·yL·zHₙEₘ (II)

in der M¹ mindestens ein zweiwertiges Metallatom ausgewählt aus Zn(II), Fe(II), Co(II), Ni(II), Mn(II), Cu(II), Sn(II) oder Pb(II) bedeutet und M² mindestens eines der zwei-, drei- vier- oder fünfwertigen Metalle Fe(II), Fe(III), Co(III), Cr(III), Mn(II), Mn(III), Ir(III), Rh(III), Ru(II), V(IV) oder V(V) ist. M³ kann dabei M¹ und/oder M² sein und A, D und E bedeuten jeweils ein Anion, die gleich oder verschieden sein können. L ist ein Lösemittelligand ausgewählt aus einen Alkohol, Aldehyd, Keton, Ether, Ester, Amid, Nitril oder Sulfid oder einem Gemisch daraus; a und d sind Zahlen, die der Wertigkeit von M¹ und M² in dem Doppelmetall-Cyanidteil der allgemeinen Formel (II) entsprechen; b und c bedeuten ganze Zahlen (mit b>c), die zusammen mit a und d die Elektroneutralität des Doppelmetall-Cyanidteils der allgemeinen Formel (II) ergeben; e ist eine ganze Zahl, die der Wertigkeit von M³ entspricht, n und m sind ganze Zahlen, die die Elektroneutralität von HE ergeben; w ist eine Zahl zwischen 0,1 und 4, x eine Zahl bis zu 20; y eine Zahl zwischen 0,1 und 6, und z eine Zahl zwischen 0,1 und 5.

Für das erfindungsgemäße Aufpolymerisieren der Polyoxypropylen-Polymerblöcke A eignen sich auch DMC-Katalysatorkomplexe aus einem Doppelmetallcyanid der oben genannten Art, einem organischen Koordinationsagens, einem löslichen Metallsalz, einem Polyetherpolyol und einem organischen Polysiloxan.

Neben der durch DMC-Katalysatoren erzielbaren besonders engen Molmassenverteilung zeichnen sich die so hergestellten Polyether-Blockcopolymere auch durch eine hohe erzielbare mittlere Molmasse sowie durch eine sehr niedrige Zahl an Doppelbindungen an den Enden der Polymerketten aus. Die Polyoxypropyleneinheiten A und der zentrale Block B haben typischerweise eine Polydispersität PD (M_{w}/Mₙ) von kleiner als 2,5, vorzugsweise von1,0 bis 2,0 und besonders bevorzugt von 1,1 bis 1,5.

Die erfindungsgemäßen Polyether- Blockcopolymere der Struktur B-(A-OH)ₙ haben bevorzugt Molekulargewichte (Mₙ) zwischen 4.000 und 40.000 g/mol (Dalton) und eine OH-Zahl nach DIN 53783 zwischen 3 und 56 mg KOH/g, bevorzugt zwischen 6 und 20 mg KOH/g.

Gegenstand der vorliegenden Erfindung ist auch eine Zusammensetzung, die durch Umsetzung mindestens eines erfindungsgemäßen Polyether-Blockcopolymers der allgemeinen Struktur B-(A-OH)ₙ und mindestens einer Komponente, die mindestens eine Polymersequenz, die stofflich mit der Struktur A oder B des erfindungsgemäßen Polyether-Blockcopolymers übereinstimmt, enthält, erhältlich ist. Mit einer derartigen Zusammensetzung lassen sich Phasen- und Domänenseparationsvorgänge unterdrücken.

Unter "stofflich übereinstimmen" wird erfindungsgemäß verstanden, dass die betreffenden Polymersequenzen aus den gleichen Monomeren bestehen, die auch in identischer Weise miteinander verknüpft sind. Die betreffenden Polymersequenzen sind daher mit identischen Verbindungsnamen anzusprechen. Nicht von dem Begriff "stofflich übereinstimmen" umfasst sind hingegen Parameter, die sich aus der Anzahl der Monomeren ergeben, insbesondere die Molmasse. Die zweite Komponente kann im Rahmen des erfindungsgemäßen Verfahrens somit Polyoxypropylen und/oder eines der oben aufgeführten Polymere enthalten, welche den zentralen Polymerblock B innerhalb des erfindungsgemäßen Polyether-Blockcopolymers der allgemeinen Struktur B-(A-OH)ₙ bilden, wobei die Polymersequenzen durchaus unterschiedliche Molekulargewichte aufweisen können.

Erfindungsgemäß bevorzugt ist eine Zusammensetzung, die durch Umsetzung mindestens eines erfindungsgemäßen Polyether-Blockcopolymers der allgemeinen Struktur B-(A-OH)ₙ, mindestens einer Komponente, die mindestens eine Polymersequenz, die stofflich mit der Struktur A oder B des erfindungsgemäßen Polyether-Blockcopolymers übereinstimmt, enthält, sowie mindestens eines im stöchiometrischen Überschuss, bezogen auf das molare Verhältnis NCO/OH der Summe aller Komponenten, vorliegenden Polyisocyanats erhältlich ist.
Besonders bevorzugt ist eine Zusammensetzung, die durch Umsetzung a) mindestens eines erfindungsgemäßen Polyether-Blockcopolymers, b) mindestens eines hydroxyfunktionellen Blockcopolyesters, der aus mindestens einer Polycarbonsäure, mindestens einem kurzkettigen Diol und mindestens einem Polyol hergestellt ist, wobei das Polyol mindestens eine Polymersequenz, die stofflich mit der Struktur A oder B des erfindungsgemäßen Polyether-Blockcopolymers übereinstimmt, enthält, und c) mindestens eines im stöchiometrischen Überschuss, bezogen auf das molare Verhältnis NCO/OH der Summe aller Komponenten, eingesetzten Polyisocyanats erhältlich ist. Eine derartige Zusammensetzung ist besonders gut als Basis für Hotmelt-Kleb- und/oder Beschichtungsstoffe geeignet.

Unter "hydroxyfunktionell" wird verstanden, dass die betreffende Komponente über mindestens zwei reaktive OH-Gruppen verfügt.

Bevorzugt weist die Gesamtheit der umzusetzenden Komponenten eine terminale Ungesättigtheit auf, die unter 0,07 meq/g, insbesondere unter 0,04 meq/g und bevorzugt bei 0,02 meq/g liegt, bestimmt durch die Methode ASTM D4671.

Als Polyisocyanate sind dabei insbesondere Diisocyanate geeignet, die ausgewählt aus der Gruppe bestehend aus allen Isomeren des Toluylendiisocyanats (TDI), entweder in isomerenreiner Form oder als Mischung mehrerer Isomerer, Naphthalin-1,5-diisocyanat, 4,4'-Diphenylmethandiisocyanat, 2,4'-Diphenylmethandiisocyanat sowie deren Mischungen, Xylen-diisocyanat (XDI), 4,4'-Dicyclohexylmethandiisocyanat (H₁₂MDI), 1-Isocyanatomethyl-3-isocyanato-1,5,5-trimethyl-diisocyanat (Isophorondiisocyanat, IPDI), Cyclohexan,1,4-diisocyanat, hydriertes Xylylen-diisocyanat (H₆XDI), 1-Methyl-2,4-diisocyanato-cyclohexan, Hexan-1,6-diisocyanat (HDI), m- oder p-Tetramethylxylendiisocyanat (m-TMXDI, p-TMXDI) oder Mischungen der vorgenannten Diisocyanate sind. Das Poly- beziehungsweise Diisocyanat wird vorzugsweise in einem stöchiometrischen Überschuss von 1,05 bis 6:1 (mol/mol-Verhältnis der NCO/OH Gruppen) eingesetzt.

Bevorzugt wird nach vollständiger Umsetzung das überschüssige monomere Polyisocyanat aus dem Reaktionsgemisch durch Destillations-, Extraktions-, chromatographische oder Kristallisationsverfahren entfernt. Besonders bevorzugt erfolgt die Entfernung des Restmonomers oder der Monomermischung durch Dünnschichtdestillation, Kurzwegdestillation ggf. im Hochvakuum oder mittels Durchleitung von Inertgas im Gegenstrom, wobei Restmonomergehalte von kleiner als 0,1 Gew.% erhalten werden. Es kann auch eine Kombination von zwei oder mehr der vorgenannten Separationsverfahren angewandt werden.

Als Polycarbonsäuren zur Herstellung des Blockcopolyesters werden bevorzugt aromatische Dicarbonsäuren ausgewählt aus Terephthalsäure, Isophthalsäure, Phthalsäure, Dibenzoesäure, Bis(p-carboxyphenyl)methan, p-Oxy(p-carboxyphenyl)benzoesäure, Ethylen-bis(p-oxybenzoesäure), Ethylen-bis(p-benzoesäure), Tetramethylen-bis(p-oxybenzoesäure), 1,5-Naphthalindicarbonsäure, 2,6-Naphthalindicarbonsäure, 2,7-Naphthalindicarbonsäure, Phenanthrendicarbonsäure, Anthracendicarbonsäure, 4,4'-Sulfonyldibenzoesäure, Indendicarbonsäure, sowie deren Kernsubstituierte Derivative wie C₁ -C₁₀- Alkyl, Halogen-, Alkoxy- oder Aryl- Derivate, p-(β-Hydroxyethoxy)benzoesäure oder deren Mischungen, wobei der Anteil an Terephthalsäure vorzugsweise mindestens 75 Gew.% der Dicarbonsäuremischung ausmacht, eingesetzt. Gegebenenfalls können anteilig aliphatische oder cycloaliphatische Dicarbonsäuren zur Herstellung des Polyester-ether- BlockCopolymers mitverwendet werden.

Als kurzkettige Diolkomponente des Block-Copolyesters werden bevorzugt C₂- bis C₁₂- Alkandiole, vorzugsweise Ethylenglycol, Propylenglycol, Butandiol, Hexandiol, Octandiol oder deren Mischungen verwendet.

Das mindestens eine zum Aufbau des Blockcopolyesters eingesetzte, mindestens eine stofflich mit der Sequenz A oder B des erfindungsgemäßen Polyether-Blockcopolymers übereinstimmende Polymersequenz enthaltende Polyol ist bevorzugt ein Polyoxypropylenpolyol oder ein Polymer entsprechend den oben als "Startverbindung B" beschriebenen Polymeren, das jedoch nicht hinsichtlich des Molekulargewichts mit diesen übereinstimmen muss. Erfindungsgemäß ist es aber ebenso möglich, dass das Polyol lediglich eine polymere Sequenz enthält, die sich auch in einer "Startverbindung B" wieder findet. Eine derartige Sequenz kann beispielsweise innerhalb einer Blockcopolymer-Struktur vorliegen, wobei weitere Blöcke sich sowohl in stofflicher Hinsicht als auch in ihren Molekulargewichten durchaus von den Bestandteilen des erfindungsgemäßen Polyether-Blockcopolymers B-(A-OH)ₙ unterscheiden können. Der Begriff "stofflich" umfasst im bereits erwähnten Sinne die chemische Natur der Monomeren und ihre Verknüpfung, nicht jedoch ihre Anzahl und somit das Molekulargewicht.

Ganz besonders bevorzugt ist eine Zusammensetzung, die durch Umsetzung a) mindestens eines erfindungsgemäßen Polyether-Blockcopolymers, b) mindestens eines hydroxyfunktionellen Blockcopolyesters, der aus mindestens einer Polycarbonsäure, mindestens einem kurzkettigen Diol und mindestens einem Polyol hergestellt ist, wobei das Polyol mindestens eine Polymersequenz, die stofflich mit der Struktur A oder B des erfindungsgemäßen Polyether-Blockcopolymers übereinstimmt, enthält, c) mindestens eines hydroxyfunktionellen Polyesters, der aus einer Polycarbonsäure und einem kurzkettigen Diol hergestellt ist, und d) mindestens eines im stöchiometrischen Überschuss, bezogen auf das Verhältnis NCO/OH der Summe aller Komponenten, eingesetzten Polyisocyanats erhältlich ist. Für bevorzugte Komponenten des aus Polycarbonsäure und kurzkettigem Diol hergestellten Polyesters gelten die diesbezüglichen Ausführungen zum Blockcopolyester.

In den erfindungsgemäßen Zusammensetzungen besteht der zentrale Block B des erfindungsgemäßen Polyether-Blockcopolymers a) aus Polyacrylat- oder Polymethacrylateinheiten.

Die erfindungsgemäßen Zusammensetzungen eignen sich besonders gut als reaktiver Schmelzkleb- und/oder Beschichtungsstoff und zeigen sowohl während der Herstellung als auch innerhalb der fertigen Zusammensetzung keine Phasen- oder Domänenseparation.

Ein weiterer Gegenstand der vorliegenden Erfindung ist ein Verfahren zur Herstellung einer Zusammensetzung, das dadurch gekennzeichnet ist, dass mindestens ein erfindungsgemäßes Polyether-Blockcopolymer der allgemeinen Struktur B-(A-OH)ₙ und mindestens eine Komponente, die mindestens eine Polymersequenz, die stofflich mit der Struktur A oder B des erfindungsgemäßen Polyether-Blockcopolymers übereinstimmt, enthält, miteinander umgesetzt werden.

Im Rahmen einer bevorzugten Ausführungsform des erfindungsgemäßen Verfahrens werden mindestens ein erfindungsgemäßes Polyether-Blockcopolymer der allgemeinen Struktur B-(A-OH)ₙ, mindestens eine Komponente, die mindestens eine Polymersequenz, die stofflich mit der Struktur A oder B des erfindungsgemäßen Polyether-Blockcopolymers übereinstimmt, enthält, sowie mindestens ein im stöchiometrischen Überschuss, bezogen auf das molare Verhältnis NCO/OH der Summe aller Komponenten, vorliegendes Polyisocyanat miteinander umgesetzt.
Insbesondere werden mindestens a) ein erfindungsgemäßes Polyether-Blockcopolymer, b) mindestens ein hydroxyfunktioneller Blockcopolyester, der aus mindestens einer Polycarbonsäure, mindestens einem kurzkettigen Diol und mindestens einem Polyol hergestellt ist, wobei das Polyol mindestens eine Polymersequenz, die stofflich mit der Struktur A oder B des erfindungsgemäßen Polyether-Blockcopolymers übereinstimmt, enthält, und c) mindestens ein im stöchiometrischen Überschuss, bezogen auf das molare Verhältnis NCO/OH der Summe aller Komponenten, eingesetztes Polyisocyanat miteinander umgesetzt. Nach diesem Verfahren hergestellte Zusammensetzungen sind besonders gut als Basis für Hotmelt-Kleb- und/oder Beschichtungsstoffe geeignet.

Besonders bevorzugt wird im Rahmen des erfindungsgemäßen Verfahrens eine Zusammensetzung durch Umsetzung a) mindestens eines erfindungsgemäßen Polyether-Blockcopolymers, b) mindestens eines hydroxyfunktionellen Blockcopolyesters, der aus mindestens einer Polycarbonsäure, mindestens einem kurzkettigen Diol und mindestens einem Polyol hergestellt ist, wobei das Polyol mindestens eine Polymersequenz, die stofflich mit der Struktur A oder B des erfindungsgemäßen Polyether-Blockcopolymers übereinstimmt, enthält, c) mindestens eines hydroxyfunktionellen Polyesters, der aus mindestens einer Polycarbonsäure und mindestens einem kurzkettigen Diol hergestellt ist, und d) mindestens eines im stöchiometrischen Überschuss, bezogen auf das Verhältnis NCO/OH der Summe aller Komponenten, eingesetzten Polyisocyanats hergestellt. Für bevorzugte Komponenten des aus Polycarbonsäure und kurzkettigem Diol hergestellten Polyesters gelten die diesbezüglichen Ausführungen zum Blockcopolyester.

Alternativ zu den bisher beschriebenen Verfahren beziehungsweise zu den Zusammensetzungen, die durch diese Verfahren erhältlich sind, ist es erfindungsgemäß möglich, das erfindungsgemäße Polyether-Blockcopolymer der allgemeinen Struktur B-(A-OH)ₙ in einem ersten Schritt mit einem stöchiometrischen Überschuss, bezogen auf das molare Verhältnis von NCO- zu OH-Gruppen, mindestens eines Poly- oder Diisocyanats umzusetzen. Das daraus resultierende Produkt wird dann im Sinne der vorstehenden Ausführungsformen weiter mit mindestens einer Komponente, die mindestens eine Polymersequenz, die stofflich mit der Struktur A oder B des erfindungsgemäßen Polyether-Blockcopolymers übereinstimmt, enthält, gegebenenfalls mit weiterem Di- oder Polyisocyanat und gegebenenfalls mit weiteren Komponenten zu einer erfindungsgemäßen Zusammensetzung umgesetzt.

Ein weiterer Gegenstand der vorliegenden Erfindung ist eine Zubereitung, die mindestens eine erfindungsgemäße Zusammensetzung oder eine nach einem erfindungsgemäßen Verfahren hergestellte Zusammensetzung enthält.
Die erfindungsgemäßen Zubereitungen können neben einer erfindungsgemäßen Zusammensetzung noch weitere Hilfs- und Zusatzstoffe enthalten, die diesen Zubereitungen verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester (z.B. "Mesamoll", Alkylsulfonsäurephenylester, Fa. Bayer), Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure.

Beispielsweise eignen sich von den Phthalsäureestern Dioctylphthalat (DOP), Dibutylphthalat, Diisoundecylphthalat (DIUP) oder Butylbenzylphthalat (BBP) oder deren abgeleitete hydrierte Derivate, von den Adipaten Dioctyladipat (DOA), Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Für weitere Einzelheiten zu Weichmachern wird auf die einschlägige Literatur der Technischen Chemie verwiesen.

Weichmacher können in den Zubereitungen zwischen 0 und 40, vorzugsweise zwischen 0 und 20 Gew.% (bezogen auf die Gesamtzusammensetzung) in der Zubereitung mit verwendet werden.

Unter "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole wie z.B. Tinuvin 327 (Fa. Ciba Specialty Chemicals) und/oder Amine vom "HALS"-Typ (Hindered Amine Light Stabilizer), wie z.B. Tinuvin 770 (Fa. Ciba Specialty Chemicals). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Die erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als Katalysatoren können alle bekannten Verbindungen eingesetzt werden, die beispielsweise die Hydrolyse von NCO-Gruppen und anschließende Kondensation der so entstandenen Amino-Gruppe mit noch vorhandenen NCO-Gruppen (Vernetzungsreaktion) katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, 2-Ethyl-4-methyl-imidazole, und 1,8-Diazabicyclo-(5,4,0)-undecen-7 (DBU) oder Derivate des Morpholins. Konkrete Beispiele für geeignete Morpholino-Verbindungen sind N-methylmorpholin, Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, Dimorpholinodiethylether (DMDEE) oder Di-2,6-dimethylmorpholinoethyl)ether. Der Katalysator, bevorzugt Mischungen mehrerer Katalysatoren, wird bevorzugt in einer Menge von 0,01 bis etwa 5 Gew.-% bezogen auf das Gesamtgewicht der Zubereitung eingesetzt.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydriertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 0 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen.

Als Haftvermittler eignen sich so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Organofunktionelle Silane eignen sich ebenfalls als Haftvermittler, beispielhaft erwähnt seien hier die Aminoalkylalkoxysilane, 3-Glycidyloxipropyl-trialkoxysilan, 3-Mercaptopropyl-trialkoxysilan, 3-Aminopropyltrialkoxysilan, N-Aminoethyl-3-Aminopropyl-Methyldialkoxysilan, Phenylaminopropyltrialkoxysilan, Aminoalkyltrialkoxydisilan oder i-Butylmethoxysilan oder auch Vinyltrialkoxysilan. Dabei sind die Alkoxygruppen in der Regel C1 bis C4-Alkoxygruppen. Falls Klebrigmacher als Haftvermittler eingesetzt werden, hängt deren Art und Menge von der Kleb-/ Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide, organofunktionelle Silane oder Phenolharze oder Resorcinderivate werden im Bereich zwischen 0,1 und 10 Gew.%, bezogen auf die Gesamtzusammensetzung der Zubereitung verwendet.

Insbesondere Hotmelt-Zubereitungen auf Basis erfindungsgemäßer Zusammensetzungen können nicht reaktive thermoplastische Polymere enthalten. Als nicht reaktive thermoplastische Polymere können dabei thermoplastische Polyurethane, thermoplastische Polyester-Block-Copolymere, thermoplastische Polyetheramide oder niedermolekulare Polymere von ethylenisch ungesättigten Monomeren verwendet werden. Konkrete Beispiele hierfür sind (Co)polymere aus einem oder mehreren der folgenden Monomeren: C₁-C₁₈-Alkylester der Acrylsäure oder Methacrylsäure, Acrylsäure, Methacrylsäure, Ethylen, Vinylacetat, Vinylpropionat, Vinylversatat, Vinylether, Alkylfumarate, Alkylmaleate, Styrol, Alkylstyrol, Acrylnitritil und / oder Butadien oder Isopren sowie Hydrierungsprodukte der letztgenannten Dien-Copolymeren, wie z.B. Styrol- Ethylen- Propylen- oder Styrol- Ethylen- Butylen- Di- oder Triblockcopolymere. Üblicherweise haben diese Thermoplasten ein relativ niedriges Molekulargewicht. Niedriges Molekulargewicht bedeutet in diesem Zusammenhang ein durchschnittliches Molekulargewicht unterhalb von 60 000, vorzugsweise liegt das Molekulargewicht derartiger thermoplastischer Polymeren zwischen 10 000 und 40 000. "Nicht reaktiv" im Sinne dieser Erfindung sind dabei alle Thermoplasten, die praktisch keinen Zerewitinoff-aktiven Wasserstoff enthalten.

Weiterhin können erfindungsgemäße Zubereitungen, die als Schmelzklebstoff geeignet sind, noch klebrigmachende Harze, wie z.B. Abietinsäure, Abietinsäureester, Terpenharze, Terpenphenolharze, Poly-α-methylstyrol oder aliphatische, aromatische oder aromatisch-aliphatische Kohlenwasserstoffharze oder Coumaron-Inden-Harze enthalten. Gegebenenfalls können diese klebrigmachenden Harze aktive Wasserstoffatome enthalten, so dass diese durch Umsetzung mit gegebenenfalls vorhandenen Di- oder Polyisocyanaten mit in die Bindemittelmatrix des Schmelzklebstoffes eingebaut werden. Konkrete Beispiele hierfür sind hydroxyfunktionelle Ester der Abietinsäure oder auch hydroxylierte Terpenphenolharze. Weitere typische Bestandteile von Schmelzklebstoff-Zusammensetzungen sind Füllstoffe (z.B. Silikate, Talk, Calciumcarbonate, Tone oder Ruß), Thixotropiermittel (z.B. Bentone, pyrogene Kieselsäuren, Harnstoffderivate, fibrillierte oder Pulp-Kurzfasern), Farbpasten bzw. Pigmente oder Leitfähigkeitsadditive wie Leitfähigkeitsruße oder Lithiumperchlorat.

Die Herstellung der erfindungsgemäßen Zubereitung erfolgt bevorzugt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Eine bevorzugte Ausführungsform der erfindungsgemäßen Zubereitung enthält:
- 5 bis 60 Gew.%, vorzugsweise 10 bis 50 Gew.%, besonders bevorzugt 20 bis 45 Gew.% einer erfindungsgemäßen Zusammensetzung,
- 0 bis 30 Gew.%, vorzugsweise 5 bis 15 Gew.% eines nicht reaktiven thermoplastischen Polymers,
- 0 bis 60 Gew.%, vorzugsweise 20 bis 50 Gew.% eines klebrigmachenden Harzes sowie
- ggf. weitere Hilfs- und Zusatzstoffe ausgewählt aus der Gruppe der Füllstoffe, Thixotropiermittel, Farbpigmente, Leitfähigkeitsadditive, Stabilisatoren und Alterungsschutzmittel sowie haftvermittelnden Zusätze,
wobei die Summe sämtlicher Zubereitungsbestandteile 100 Gew.% ergibt.

Die erfindungsgemäßen beziehungsweise erfindungsgemäß hergestellten Zusammensetzungen enthalten vorzugsweise Prepolymere beziehungsweise stellen vorzugsweise Prepolymere dar, die mit der umgebenden Luftfeuchtigkeit zu Polymeren aushärten, so dass aus diesen Prepolymeren mit den vorgenannten Hilfs- und Zusatzstoffen feuchtigkeitshärtende Kleb- und / oder Dichtstoffzubereitungen oder Beschichtungsmittel herstellbar sind.

Ein weiterer Gegenstand der vorliegenden Patentanmeldung ist die Verwendung einer erfindungsgemäßen Zubereitung als reaktiver Schmelzklebstoff, insbesondere zur Montageverklebung, flächigen Verklebung und/oder Beschichtung. Weiterhin eignen sich die erfindungsgemäßen Zubereitungen zur Verwendung als ein- oder zweikomponentiger lösungsmittelfreier oder lösungsmittelhaltiger Kaschier-Klebstoff zur Montageverklebung, flächigen Verklebung und/oder Beschichtung von Papier, Kunststoff-Folien, Metallfolien, Geweben, Vliesstoffen oder anderen bahnförmigen Materialien, wobei diese ggf. bedruckt und/oder lackiert sein können.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der Erfindungsgegenstände in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### Beispiele

Die Herstellung des DMC Katalysators erfolgt nach der Vorschrift von Shell, wie sie es in US 4477589 Beispiel 6, beschleuingte Variante, beschrieben wird.

### Polvether-Blockcopolvmer 1 (nicht erfindungsgemäß): Herstellung PPG-pTHF2000-PPG Blockcopolymer MW 4000

In einem 2 I Reaktor wurden 250 g Poly-THF (Mₙ 2000) vorgelegt und über Nacht ausgeheizt. Anschließend wurden der Ansatz mit 200 ppm DMC Katalysator versetzt, dreimal sekuriert und bei 110°C über vier Stunden 250 g Propylenoxid hinzu gegeben. Nach der Zugabe wird eine Stunde nachgerührt und der Ansatz mit 300 ppm Radikalfänger (zum Beispiel Irganox 1010) zur Stabilisierung abgefüllt.
Das Polyether-Blockcopolymer 1 weist eine OHZ von 28 bei einem Schmelzbereich von 45°C auf.

### Polvether-Blockcopolvmer 2 (nicht erfindungsgemäß): Herstellung PPG-pTHF2000-PPG Blockcopolymer MW 8000

In einem 2 I Reaktor wurden 83 g Poly-THF (Mₙ 2000) vorgelegt und über Nacht ausgeheizt. Anschließend wurden der Ansatz mit 200 ppm DMC Katalysator versetzt, dreimal sekuriert und bei 110°C über vier Stunden 470 g Propylenoxid hinzu gegeben. Nach der Zugabe wird eine Stunde nachgerührt und der Ansatz mit 300 ppm Radikalfänger zur Stabilisierung abgefüllt.
Das Polyether-Blockcopolymer 2 weist eine OHZ von 14 bei einer Viskosität von 12.800 mPas bei RT auf.

### Polyurethan-Hotmelts

Ein Hotmelt-Klebstoff wird anhand der folgenden Basiszusammensetzung formuliert (Angaben in Gewichtsprozent):
40% α-MethyIstyroIharz
10% Blockcopolyester (gemäß Tabelle 1)
10% Ethylvinylacetat (50% VAc)
15% Polyol (gemäß Tabelle 1)
15% Hydroxylgruppen enthaltender aliphatischer Polyester (Dynacoll 7360)
10% 4,4'-Methylenbis(phenylisocyanat) (MDI)

**Tabelle 1: Blockcopolyester und Polyole in vorstehender Basiszusammensetzung - Auswirkung auf die Verträglichkeit der Komponenten**

| Beispiel Nr. | 1 (Vergleich) | 2 (Vergleich) | 3 (Vergleich) | 4 (Vergleich) |
|---|---|---|---|---|
| Blockcopolyester | Hytrel 3078 | Hytrel 3078 | Hytrel G 3548 | Hytrel G 3548 |
| Polyol | PPG | Polyether-Blockcopolymer 1 | p-THF | Polyether-Blockcopolymer 2 |
| | | | | |
| Separation | Ja | Nein | Ja | Nein |

| | | | | |
|---|---|---|---|---|
| Hytrel 3078: Blockcopolyester aus Phthalsäure/p-THF/Butandiol von DuPont Hytrel G 3548: Blockcopolyester aus Terephthalsäure/PPG/Butandiol von DuPont PPG: Polypropylenglycol p-THF: Poly-Tetrahydrofuran | | | | |

Aus Tabelle 1 wird folgendes ersichtlich: Verwendet man ein Polyol, das keine im Blockcopolyester enthaltene Polymersequenz aufweist, so kommt es zu Separationserscheinungen. Das bedeutet hier, dass sich der Blockcopolyester zunächst in der Mischung der weiteren Komponenten auch oberhalb seines Schmelzpunktes kaum löst, spätestens aber unterhalb seiner Schmelztemperatur wieder ausfällt (Phasenseparation). Auch im fertigen Hotmelt-Klebstoff sind separierte Phasen beziehungsweise Domänen vorhanden. Wird hingegen ein erfindungsgemäßes Polyether-Blockcopolymer eingesetzt, so lösen sich die Komponenten sehr gut ineinander. Es tritt daher sowohl vor und während der Umsetzung als auch im fertigen Klebstoff keine Separation ein.

## Patentansprüche

1. Polyether-Blockcopolymer der allgemeinen Struktur B-(A-OH)ₙ, wobei n gleich oder größer als 2 ist und die Blöcke A aus Polyoxypropyleneinheiten und der zentrale Block B aus Polyacrylat- oder Polymethacrylateinheiten bestehen.

2. Polyether-Blockcopolymer nach Anspruch 1, **dadurch gekennzeichnet, dass** die Polyoxypropyleneinheiten A und der zentrale Block B jeweils eine Polydispersität PD (M_{w}/Mₙ) von kleiner als 2,5, vorzugsweise von 1,00 bis 2,00, besonders bevorzugt von 1,10 bis 1,50 aufweisen.

3. Polyether-Blockcopolymer nach mindestens einem der vorhergehenden Ansprüche, **dadurch gekennzeichnet, dass** das Polyether- Blockcopolymer ein Molekulargewicht zwischen 4.000 und 40.000 g/mol (Dalton) aufweist.

4. Polyether-Blockcopolymer nach mindestens einem der vorhergehenden Ansprüche, **dadurch gekennzeichnet, dass** der zentrale Block B unter DMC-Katalyse, Katalyse durch ein oder mehrere Phosphacen- und/oder Porphyrin-Derivat(e) oder Alkalimetall-Katalyse, insbesondere Cs-Katalyse, bevorzugt unter DMC-Katalyse, propoxyliert wurde.

5. Zusammensetzung, erhältlich durch Umsetzung mindestens eines Polyether-Blockcopolymers nach mindestens einem der Ansprüche 1 bis 4 und mindestens einer Komponente, enthaltend mindestens eine Polymersequenz, die stofflich mit der Struktur A oder B des Polyether-Blockcopolymers nach mindestens einem der Ansprüche 1 bis 4 übereinstimmt.

6. Zusammensetzung nach Anspruch 5, erhältlich durch Umsetzung mindestens
a) eines Polyether-Blockcopolymers nach mindestens einem der Ansprüche 1 bis 4,
b) mindestens eines hydroxyfunktionellen Blockcopolyesters, hergestellt aus mindestens einer Polycarbonsäure, mindestens einem kurzkettigen Diol und mindestens einem Polyol, wobei das Polyol mindestens eine Polymersequenz, die stofflich mit der Struktur A oder B des Polyether-Blockcopolymers nach mindestens einem der Ansprüche 1 bis 4 übereinstimmt, enthält, und
c) mindestens eines im stöchiometrischen Überschuss, bezogen auf das molare Verhältnis NCO/OH der Summe aller Komponenten, eingesetzten Di- oder Polyisocyanats.

7. Zusammensetzung nach Anspruch 5 oder 6, **dadurch gekennzeichnet, dass** die Gesamtheit der umzusetzenden Komponenten eine terminale Ungesättigtheit aufweist, die unter 0,07 meq/g, insbesondere unter 0,04 meq/g und bevorzugt bei 0,02 meq/g liegt, bestimmt durch die Methode ASTM D4671.

8. Zubereitung, enthaltend mindestens eine Zusammensetzung nach mindestens einem der Ansprüche 5 bis 7.

9. Verwendung einer Zubereitung nach Anspruch 8 als reaktiver Schmelzklebstoff zur Montageverklebung, flächigen Verklebung und/oder Beschichtung.

## Claims

1. A polyether block copolymer of the general structure B-(A-OH)ₙ, wherein n is greater than or equal to 2 and the blocks A consist of polyoxypropylene units and the central block B consists of polyacrylate units or polymethacrylate units.

2. The polyether block copolymer according to claim 1, **characterized in that** the polyoxypropylene units A and the central block B each have a polydispersity PD (M_{w}/Mₙ) of less than 2.5, preferably from 1.00 to 2.00, particularly preferably from 1.10 to 1.50.

3. The polyether block copolymer according to at least one of the preceding claims, **characterized in that** the polyether block copolymer has a molecular weight of between 4,000 and 40,000 g/mol (Dalton).

4. The polyether block copolymer according to at least one of the preceding claims, **characterized in that** the central block B is propoxylated by means of DMC catalysis, catalysis by one or more phosphazene and/or porphyrin derivative(s) or alkali metal catalysis, in particular Cs catalysis, preferably by means of DMC catalysis.

5. A composition, obtainable by reacting at least one polyether block copolymer according to at least one of claims 1 to 4 and at least one component containing at least one polymer sequence which materially matches the structure A or B of the polyether block copolymer according to at least one of claims 1 to 4.

6. The composition according to claim 5, obtainable by reacting at least
a) one polyether block copolymer according to at least one of claims 1 to 4,
b) at least one hydroxy-functional block copolyester, prepared from at least one polycarboxylic acid, at least one short-chain diol and at least one polyol, wherein the polyol contains at least one polymer sequence which materially matches the structure A or B of the polyether block copolymer according to at least one of claims 1 to 4, and
c) at least one diisocyanate or polyisocyanate used at a stoichiometric excess, based on the molar ratio NCO/OH of the sum of all components.

7. The composition according to claim 5 or 6, **characterized in that** the totality of the components to be reacted has a terminal unsaturation of less than 0.07 meq/g, in particular less than 0.04 meq/g, and preferably of 0.02 meq/g, determined by the method ASTM D4671.

8. A preparation containing at least one composition according to at least one of claims 5 to 7.

9. The use of a preparation according to claim 8 as a reactive hot-melt adhesive for assembly bonding, surface bonding and/or coating.

## Revendications

1. Copolymère à blocs polyéther de structure générale B-(A-OH)ₙ, dans lequel n est supérieur ou égal à 2 et les blocs A comprend des unités de poly(oxyde de propylène) et le bloc central B comprend des unités polyacrylates ou polyméthacrylates.

2. Copolymère à blocs polyéther selon la revendication 1, **caractérisé en ce que** les unités de poly(oxyde de propylène) A et le bloc central B présentent chacun une polydispersité PD (Mw/Mn) inférieure à 2,5, de préférence allant de 1,00 à 2,00, de manière particulièrement préférée allant de 1,10 à 1,50.

3. Copolymère à blocs polyéther selon au moins une des revendications précédentes, **caractérisé en ce que** le copolymère à blocs polyéther a un poids moléculaire comprise entre 4 000 et 40 000 g/mol (Dalton).

4. Copolymère à blocs polyéther selon au moins une des revendications précédentes, **caractérisé en ce que** le bloc central B a été soumis à une propoxylation par catalyse au cyanure métallique double (DMC), par catalyse avec un ou plusieurs dérivés du phosphazène et/ou de la porphyrine ou par catalyse avec métal alcalin, en particulier par catalyse au césium (Cs), de préférence par catalyse au cyanure métallique double (DMC).

5. Composition, pouvant être obtenue par mise en oeuvre d'au moins un copolymère à blocs polyéther selon au moins une des revendications 1 à 4 et d'au moins un composé, contenant au moins une séquence polymère, concordant matériellement avec la structure A ou B du copolymère à blocs polyéther selon au moins une des revendications 1 à 4.

6. Composition selon la revendication 5, pouvant être obtenue par mise en oeuvre d'au moins
a) un copolymère à blocs polyéther selon au moins une des revendications 1 à 4,
b) au moins un copolyester à blocs hydroxyfonctionnel, préparé à partir d'au moins un acide polycarboxylique, d'au moins un diol à chaîne courte et d'au moins un polyol, le polyol contenant au moins une séquence polymère concordant matériellement avec la structure A ou B du copolymère à blocs polyéther selon au moins une des revendications 1 à 4, et
c) au moins un di- ou polyisocyanate utilisé en excédent stoechiométrique, rapporté au rapport molaire NCO/OH de la somme de tous les composés.

7. Composition selon la revendication 5 ou 6, **caractérisée en ce que** la totalité des composés à mettre en oeuvre présente une insaturation terminale, inférieure à 0,07 meq/g, en particulier inférieure à 0,04 meq/g et de préférence de 0,02 meq/g, déterminée par la méthode ASTM D4671.

8. Préparation, contenant au moins un copolymère à blocs polyéther selon au moins une des revendications 5 à 7.

9. Application d'une préparation selon la revendication 8 comme adhésif fusible réactif destiné au collage de montage, au collage de surface et/ou au revêtement.
